(19) Europäisches Patentamt
European Patent Office
Office européen des brevets

(11) EP 0 674 022 B1

(12) **EUROPEAN PATENT SPECIFICATION**

(45) Date of publication and mention of the grant of the patent:
**17.09.1997 Bulletin 1997/38**

(51) Int Cl.6: **C23F 11/173**, C02F 5/10

(21) Application number: **95301604.5**

(22) Date of filing: **10.03.1995**

(54) **Method of inhibiting scale and controlling corrosion in cooling water systems**

Verfahren zur Inhibierung von Inkrustation und Korrosion in wässrigen Kühlsysteme

Procédé pour inhiber l'incrustation et la corrosion dan sdes systèmes aqueux de refroidissement

(84) Designated Contracting States:
**AT BE DE ES FR GB IE IT NL PT**

(30) Priority: **11.03.1994 US 209807**
**11.03.1994 US 212419**

(43) Date of publication of application:
**27.09.1995 Bulletin 1995/39**

(73) Proprietor: **BETZ EUROPE, INC.**
**Trevose, PA 19053-6783 (US)**

(72) Inventors:
- **Freese, Donald Todd**
  **Glenside, PA 19038 (US)**
- **Bair, Keith Alan**
  **Horsham, PA 19044 (US)**
- **Perez, Libardo Aquiles**
  **Morrisville, PA 19067 (US)**
- **Chen, Fu**
  **Newtown, PA 18940 (US)**

(74) Representative: **W.P. Thompson & Co.**
**Coopers Building,**
**Church Street**
**Liverpool L1 3AB (GB)**

(56) References cited:

| | |
|---|---|
| **EP-A- 0 123 108** | **EP-A- 0 142 929** |
| **EP-A- 0 184 894** | **EP-A- 0 337 694** |
| **EP-A- 0 554 074** | **US-A- 4 392 972** |
| **US-A- 4 471 100** | **US-A- 4 847 410** |
| **US-A- 4 874 540** | **US-A- 4 895 663** |
| **US-A- 4 959 156** | **US-A- 5 180 498** |
| **US-A- 5 242 599** | **US-A- 5 248 438** |
| **US-A- 5 248 438** | **US-A- 5 282 976** |

- **PATENT ABSTRACTS OF JAPAN vol. 007 no. 147 (C-173) ,28 June 1983 & JP-A-58 058285 (KATAYAMA KAGAKU KOGYO KENKYUSHO:KK) 6 April 1983,**
- **PATENT ABSTRACTS OF JAPAN vol. 006 no. 040 (C-094) ,12 March 1982 & JP-A-56 155692 (NIPPON SHOKUBAI KAGAKU KOGYO CO LTD) 1 December 1981,**
- **PATENT ABSTRACTS OF JAPAN vol. 008 no. 110 (C-224) ,23 May 1984 & JP-A-59 023885 (SANYO KASEI KOGYO KK) 7 February 1984,**
- **PATENT ABSTRACTS OF JAPAN vol. 008 no. 071 (C-217) ,3 April 1984 & JP-A-58 224180 (KURITA KOGYO KK) 26 December 1983,**
- **PATENT ABSTRACTS OF JAPAN vol. 008 no. 085 (C-219) ,18 April 1984 & JP-A-59 006382 (KURITA KOGYO KK) 13 January 1984,**
- **PATENT ABSTRACTS OF JAPAN vol. 012 no. 349 (C-529) ,20 September 1988 & JP-A-63 105984 (NIPPON SHOKUBAI KAGAKU KOGYO CO LTD) 11 May 1988,**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 0 674 022 B1

Printed by Jouve, 75001 PARIS (FR)

## Description

The present invention pertains to a method of inhibiting corrosion and scale formation on heat transfer surfaces in contact with the water in a cooling water system.

The problems of corrosion and scale formation and attendant effects have troubled water systems for years. For instance, scale tends to accumulate on internal walls of various water systems, such as cooling systems, and thereby materially lessens the operational efficiency of the system.

Deposits in lines, heat exchange equipment, etc., may originate from several causes. For example, precipitation of calcium carbonate, calcium sulfate and calcium phosphate in the water system leads to an accumulation of these scale imparting compounds along or around the metal surfaces which contact the flowing water circulating through the system. In this manner, heat transfer functions of the particular system are severely impeded.

Corrosion, on the other hand, is a degradative electrochemical reaction of a metal with its environment. Simply stated, it is the reversion of refined metals to their natural state. For example, iron ore is iron oxide. Iron oxide is refined into steel. When the steel corrodes, it forms iron oxide which, if unattended, may result in failure or destruction of the metal, causing the particular water system to be shut down until the necessary repairs can be made.

Typically, in cooling water systems, the formation of calcium sulfate, calcium phosphate and calcium carbonate, among others, has proven deleterious to the overall efficiency of the cooling water system. Recently, due to the popularity of cooling treatments using high levels of orthophosphate to promote passivation of the metal surfaces in contact with the system water, it has become critically important to control calcium phosphate crystallization so that relatively high levels of orthophosphate may be maintained in the system to achieve the desired passivation without resulting in fouling or impeded heat transfer functions which would normally be caused by calcium phosphate deposition.

Internal treatment, i.e., treatment of the water fed to the system, is necessary to prevent, reduce and/or retard formation of the scale imparting compounds and their resultant deposition. The carbonates of magnesium and calcium are not the only problem compounds as regards scale but also waters having high contents of phosphate and sulfate ions either occurring naturally or added for other purposes cause problems since calcium and magnesium, and any iron or copper present, react with each and deposit as scale. As is obvious, the deposition of scale on the structural parts of a cooling water system causes poorer circulation and lower heat transfer capacity, resulting accordingly in an overall loss in efficiency.

European Patent Specification 142 929 A3 discloses the use of water soluble polymers comprising repeat unit moieties

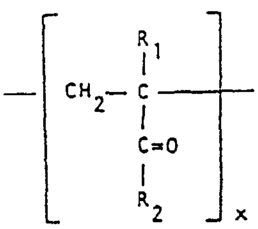

and

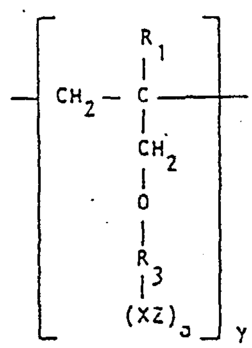

wherein $R_1$ is H or lower alkyl ($C_1$-$C_3$); $R_2$ is OH, OM, or $NH_2$; M is a water soluble cation; $R_3$ is a hydroxy substituted alkyl or alkylene radical having from 1 to about 6 carbon atoms or a non-substituted alkyl or alkylene radical having from 1 to 6 carbon atoms; X is an anionic radical; Z is H or hydrogen or a water soluble cation or cations which together counterbalance the valence of X, and a is 0 or 1. It is stated that the copolymers, and terpolymeric derivatives, can be used in a method for inhibiting calcium phosphate or calcium phosphonate deposition in aqueous systems; and also to function to provide a passivated oxide film along treated metal surfaces when used conjointly with a water soluble orthophosphate source.

US Patent specification 4,895,663 discloses a water soluble polymer composition which polymer has repeat units characterised by the structural formulae:

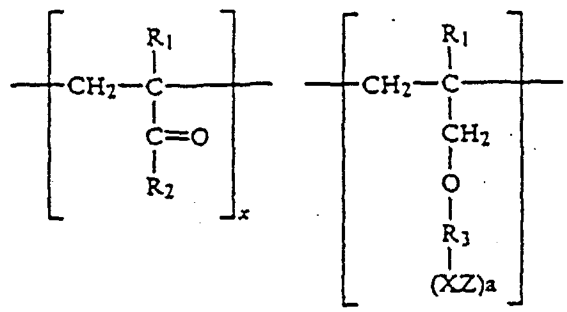

wherein $R_1$ is H or lower alkyl ($C_1$-$C_3$) ; $R_2$OH,OM, or $NH_2$; M is a water soluble cation; $R_3$ is a hydroxy substituted alkyl or alkylene radical having from 1 to about 6 carbon atoms or a non-substituted alkyl or alkylene radical having from 1 to 6 carbon atoms; X is an anionic radical; Z is H or hydrogens or a water soluble cation or cations which together counterbalance the valence of X, and a is 0 or 1. The copolymer is stated to be effective in inhibiting the precipitation of certain scale forming salts, and also acts to inhibit corrosion of metal parts in contact with water systems.

EP-A-554 074 discloses copolymers of polyalkylene glycol allyl ethers for controlling scale deposition.

US-A-5 242 599 discloses the use of copolymers of polyalkylene glycol esters of unsaturated acids for controlling scale deposition.

Many conventional scale and corrosion inhibitors exhibit acceptable utility at temperatures up to about 49°C (120°F) heat transfer surface temperature. However, beyond that temperature their effectiveness deteriorates. This operating temperature limitation and other problems have been overcome by the present invention.

It has been discovered that certain water soluble terpolymers, as shown in Formula I hereinafter, are especially effective at temperatures up to 71°C.

The water soluble terpolymers of the invention have the structure:

FORMULA I

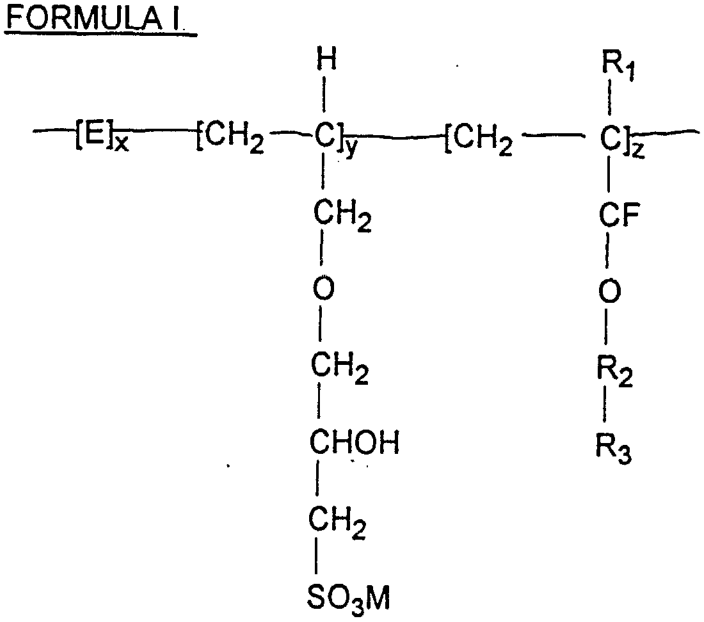

where E of Formula I comprises the repeat unit obtained after polymerization of an alpha, beta ethylenically unsaturated monomer, preferably a carboxylic acid, amide form thereof, or lower alkyl ($C_1$-$C_6$) ester or hydroxylated lower alkyl ($C_1$-$C_5$) ester of such carboxylic acids.

Exemplary compounds encompassed by E include, but are not restricted to, the repeat unit formed by polymerization of acrylic acid, methacrylic acid, acrylamide, maleic acid or anhydride, fumaric acid, itaconic acid, 2-hydroxypropyl acrylate, styrene sulfonic acid, and 2-acrylamido-2-methylpropanesulfonic acid and the like. Water soluble salt forms of these acids are also within the purview of the invention. $R_1$ in Formula I is H or lower ($C_1$-$C_4$) alkyl, F is $H_2$ or O, M is a water soluble cation, $R_2$ is $(CH_2\text{-}CH_2\text{-}O)_n$,

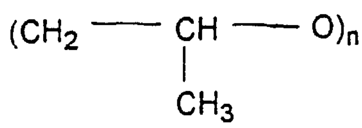

or mixture of both, n is an integer of from about 1 to about 40, $R_3$ is hydrogen, lower ($C_1$-$C_4$) alkyl, or an acetate formed as a cap on the polyethyleneglycol moiety by reacting an acetylating agent with an allyl ether polyethyleneglycol which is then reacted with the alpha, beta ethylenically unsaturated compound E to form the copolymer of Formula I. Suitable acetylating agents include acetic acid, acetic anhydride, acetyl chloride, and the like as described in U.S. Pat. Nos. 4,959,156 and 4,847,410 fully incorporated herein by reference.

Turning to monomer y in the above Formula I, these types of monomers may generally be produced by reacting allyl alcohol with a non-tertiary alcohol in the temperature range of about 25°-150°C, as is detailed in U.S. Patent No. 2,847,477 (the entire disclosure of which is hereby incorporated by reference). The allyl hydroxy propyl sulfonate ether (AHPSE) monomer disclosed may be prepared via a ring opening reaction of the epoxy group with sodium sulfite in the presence of a phase transfer catalyst such as tetra-n-butylammonium bisulfite or with fuming sulfuric acid containing sulfur trioxide which will produce the sulfonic acid group and the hydroxy group. The resulting monomer can be further neutralized with caustic or other basic material. The reaction is illustrated by the following mechanism:

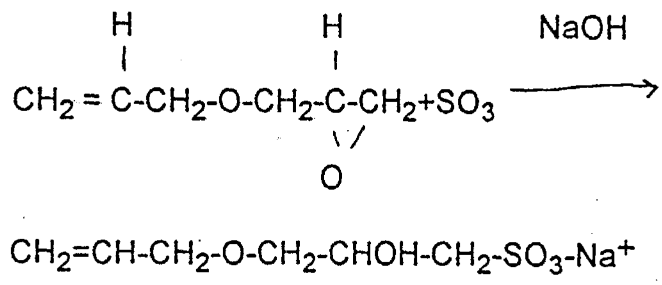


Monomer z is referred to as polyethylene glycol allyl ether (PEGAE) when F=$H_2$ and polyethylene glycol monomethacrylate (HEM) when F=O. PEGAE and HEM are prepared by ethoxylation of allyl alcohol and methacrylate ester, respectively.

Polymerization of the monomers may proceed in accordance with conventional solution, precipitation or emulsion polymerization techniques. Conventional polymerization initiators such as azo compounds, persulfates, peroxides, UV light, etc., may be used. Chain transfer agents such as alcohols (preferably isopropanol), amine or mercapto compounds may be used to regulate the molecular weight of the polymer. The resulting polymer may be isolated by well known techniques including precipitation, etc. If polymerized in water, the polymer may simply be used in its aqueous solution.

The molar ratios of the three monomeric units x:y:z is approximately 1-10:1-4:1-4. The preferable ratio is in the range of 3-6:1-3:1-2.

The number average molecular weight of the water soluble or water dispersible terpolymers of Formula I is not critical and may fall within the Mn range of about 1,000 to 100,000, desirably 1,000 to 30,000 and more desirably 1,500 to 10,000. The key criteria is that the terpolymer be water soluble or water dispersible.

The polymers should be added to the cooling water system, for which corrosion inhibiting, and/or deposit control activity is desired, in an amount effective for the purpose. This amount will vary depending upon the particular system for which treatment is desired and will be influenced by factors such as, the area subject to corrosion, pH, temperature, water quantity and the respective concentrations in the water of the potential scale and deposit forming species. For the most part, the polymers will be effective when used at levels of about 0.1-500 parts per million parts of water. The polymers may be added directly into the desired water system in a fixed quantity and in the state of an aqueous solution, continuously or intermittently.

The water soluble terpolymers of the present invention can also be used with topping agent components in order to enhance the corrosion inhibition and scale controlling properties thereof. For instance the polymers may be used in combination with one or more kinds of compounds selected from the group consisting of phosphoric acids and phosphonic acids and water soluble salts thereof. Such topping agents may be added to the system in an amount of from about 1 to 500 ppm. The weight ratio of the polymer to topping agents may vary from 100:1 to 1:5.

Examples of such phosphoric acids include condensed phosphoric acids and water soluble salts thereof. The phosphoric acids include an orthophosphoric acid, a primary phosphoric acid and a secondary phosphoric acid. Condensed phosphoric acids include polyphosphoric acids such as pyrophosphoric acid, tripolyphosphoric acid and the like, metaphosphoric acids such as trimetaphosphoric acid, tetrametaphosphoric acid, and hexametaphosphoric acid.

As to the other phosphonic acid derivatives which are to be added in addition to the polymers of the present invention, there may be mentioned aminopolyphosphonic acids such as aminotrimethylene phosphonic acid, ethylenediaminetetramethylene phosphonic acid and the like, methylene diphosphonic acid, hydroxy ethylidene diphosphonic acid (HEDP), 2-phosphono-butane-1,2,4 tricarboxylic acid, diethylenetriaminepenta(methylenephosphonic acid) and hydroxy phosphonoacetic acid. The polymers may be used in combination with yet other topping agent including corrosion inhibitors for iron, steel, copper, copper alloys or other metals, conventional scale and contamination inhibitors, and other conventional water treatment agents. Other corrosion inhibitors comprise tungstate, nitrites, borates, silicates, oxycarboxylic acids, catechols, zinc salts, molybdates and aliphatic amino surface active agents. Other scale and contamination inhibitors include lignin derivatives, tannic acids, starch, polyacrylic soda, polyacrylic amide, etc.

The water soluble polymers may be added separately to the aqueous system or may be blended with the above topping agents compounds and then added in the state of aqueous solution into the water system either continuously or intermittently.

## Examples

The invention will now be further described with reference to a number of specific examples which are to be regarded solely as illustrative and not as restricting the scope of the invention.

Free radical solution techniques were used to prepare the terpolymers of the present invention. Water was employed as the solvent, isopropyl alcohol was used as the chain transfer agent and sodium persulfate as the initiator. The allylic monomers were added to the water blend and the acrylate monomers co-fed with the initiator at 85° C. Carbon-13 NMR was then utilized to verify that polymerization was complete and that the integrity of the desired polymers survived the polymerization process. Table I shows the make-up of each of the copolymers prepared and their physical properties.

TABLE I

| Example | Monomers | Ratios | Solids | Viscosity | pH |
|---|---|---|---|---|---|
| 1 | AA/AHPSE/PEGAE=10 | 6/1/1 | 24.2 | 11.7 | 4.4 |
| 2 | AA/AHPSE/PEGAE=4 | 6/1/1 | 24.3 | 10.4 | 4.3 |
| 3 | AA/AHPSE/EP1404 | 6/1/1 | 24.9 | 11.8 | 4.5 |
| 4 | AA/AHPSE/PEGAE=10 | 6/2/1 | 25.0 | 10.0 | 4.5 |
| 5 | AA/AHPSE/PEGAE=4 | 6/2/1 | 25.4 | 9.7 | 4.5 |
| 6 | AA/AHPSE/EP1404 | 6/2/1 | 24.9 | 11.6 | 4.6 |
| 7 | AA/AHPSE/PEGAE=4 | 10/1/1 | 24.9 | 10.0 | 4.4 |
| 8 | AA/AHPSE/PEGAE=15 | 10/1/1 | 26.7 | 12.5 | 4.5 |
| 9 | AA/AHPSE/PEGAE=4 | 3/1/1 | 25.2 | 7.8 | 4.6 |
| 10 | AA/AHPSE/PEGAE=10 | 3/1/1 | 25.0 | 9.3 | 4.6 |

## TABLE I (cont'd)

| Example | Monomers | Ratios | Solids | Viscosity | pH |
|---|---|---|---|---|---|
| 11 | AA/AHPSE/HEM5 | 3/1/1 | 25.2 | 11.9 | 4.1 |
| 12 | AA/AHPSE/HEM10 | 3/1/1 | 25.1 | 12.7 | 4.3 |
| 13 | AA/AHPSE/HEM5 | 6/2/1 | 24.6 | 8.8 | 4.0 |
| 14 | AA/AHPSE/HEM10 | 6/1/1 | 25.4 | 10.1 | 4.0 |
| 15 | AA/AHPSE/HEM10 | 6/2/1 | 25.4 | 10.1 | 4.1 |
| 16 | AA/AHPSE/HEM5 | 6/1/1 | 25.4 | 9.6 | 4.0 |
| 17 | AA/AHPSE/HEM5 | 10/1/1 | 24.8 | 12.9 | 4.1 |
| 18 | AA/AHPSE/HEM10 | 10/1/1 | 25.4 | 14.1 | 4.1 |

AA-acrylic acid
AHPSE-allyloxy-2-hydroxypropylsulfonic acid
PEGAE-polyethyleneglycol allyl ether, n=avg. number of glycol repeat units
EP1404-polyethylene/propylene glycol allyl ether/14=EO units 4=PO units
HEM-polyethyleneglycol monomethacrylate, n=avg. number of glycol repeat units

Static Calcium Phosphate Scale Inhibition

Table II summarizes static calcium phosphate inhibition testing for these polymers at varying treatment levels. The tests were conducted by adding the treatment to a solution containing calcium and magnesium of the described conditions. Another solution containing phosphate and carbonate was added and the mixture incubated at 70°C (158°F) for 18 hours. The pH of the solution at (158°F) 70°C was 8.2. After the 18 hours, a measured portion of the hot solution was filtered and analyzed for phosphorus determination by using inductively coupled plasma atomic emission (ICP). From the analysis results the % inhibition was calculated by using the following relationship

$$\%\ \text{Inhibition} = \frac{[\text{ppm } PO_4 \text{ (treated) - ppm} PO_4 \text{(control)}] \times 100}{[\text{ppm } PO_4 \text{ (stock) - ppm } PO_4 \text{ (control)}]}$$

The conditions of the test were: 400 ppm Ca as $CaCO_3$, 100 ppm Mg as $CaCO_3$, 50 ppm Malk as $CaCO_3$, 10 ppm $PO_4$ as $PO_4$, pH 8.2, 158°F, 18 hours test duration.

TABLE II

| Example From Table I | TREATMENT | % INHIBITION* AT ppm ACTIVE 10 | 12 | 15 | 20 |
|---|---|---|---|---|---|
| 1 | AA/AHPSE/PEG-10 | 4(4) | 12(2) | 80(4) | 95(4) |
| 2 | AA/AHPSE/PEG-4 | 2(3) | 13(2) | 48(4) | 98(4) |
| 3 | AA/AHPSE/EP1404 | 20(4) | | 18(2) | 88(2) |
| 4 | AA/AHPSE/PEG-10 | 8(4) | | 82(4) | 75(2) |
| 5 | AA/AHPSE/PEG-4 | 3(4) | | 83(4) | 92(2) |
| 6 | AA/AHPSE/EP1404 | 19(4) | | 38(2) | 90(2) |
| 7 | AA/AHPSE/PEG-4 | 2(2) | | 9(2) | 90(2) |
| 8 | AA/AHPSE/PEG-15 | 1(2) | | 3(2) | 80(2) |
| 9 | AA/AHPSE/PEG-4 | 15(4) | 88(2) | 96(4) | 96(4) |
| 10 | AA/AHPSE/PEG-10 | 19(4) | 89(2) | 94(4) | 95(4) |
| 11 | AA/AHPSE/HEM-5 | 2(2) | | 98(2) | 100(2) |
| 12 | AA/AHPSE/HEM-10 | 7(2) | | 97(2) | 99(2) |
| 13 | AA/AHPSE/HEM-5 | 1(2) | | 95(2) | 100(2) |
| 14 | AA/AHPSE/HEM-10 | 0(2) | | 12(2) | 94(2) |
| 15 | AA/AHPSE/HEM-10 | 2(2) | | 78(2) | 95(2) |
| 16 | AA/AHPSE/HEM-5 | 5(2) | | 63(3) | 96(2) |
| 17 | AA/AHPSE/HEM-5 | 0(2) | | 0(2) | 2(2) |
| 18 | AA/AHPSE/HEM-10 | 0(2) | | 3(2) | 81(2) |

*average % inhibition with number of tests in parenthesis.
NOTE: in PEG-n or HEM-n, n is the number of PEGAE or HEM units in the polymer; for EP1404 there are 14 $-(CH_2-CH_2-O-)$ units and 4 $-(CH_2-CH(CH_3)-O-)$ units in the polymer structure.

Calcium Phosphonate Scale Inhibition

A static beaker test was used for the testing of the polymers as calcium phosphonate inhibitors. The tests were conducted by adding the treatment to a solution containing 1500 ppm Ca as $CaCO_3$, 10 ppm (active) hydroxyethylidene diphosphonic acid (HEDP) at pH 8.5 and incubated for 18 hours at 70°C (158°F). The pH was buffered with 0.01 M sodium borate. After the incubation period, a portion of the solution was hot filtered and phosphorus concentration was determined by Inductively Coupled Plasma. The extent of the inhibition was determined by using the following:

$$\% \text{ Inhibition} = \frac{[\text{ppm P (treated)} - \text{ppm P (control)}]}{[\text{ppm P (stock)} - \text{ppm P (control)}]} \times 100$$

Table III summarizes the results for this test.

TABLE III

| Treatment Example From Table I | % INHIBITION* AT ppm ACTIVE | | |
|---|---|---|---|
| | 5.0 | 10.0 | 15.0 |
| 9 | 22.7 | 49.9 | 80.2 |
| 10 | 37.8 | 80.8 | 86.0 |

Calcium Carbonate Scale Inhibition

Dynamic beaker calcium carbonate inhibition testing results are summarized in Tables IV. The tests were conducted by adding the treatment to a solution containing calcium and carbonate ions and having a pH of 8.74 at 56°C (133°F). Admiralty coupons were suspended in the solutions. The mixtures were incubated in a shaking water bath for 66 hours at 56°C (133°F). After cooling, a measured portion was filtered and the pH adjusted to less than 2.0 with hydrochloric acid. The mixture was diluted and the pH adjusted to 12 with sodium hydroxide. A calcium indicator, murexide, was added and the solution titrated to a pure-violet end point with ethylenediaminetetraacetic acid. Percent inhibition was calculated from titrations of the treated, stock, and control solutions according to the following:

$$\% \text{ Inhibition} = \frac{[\text{ppm Ca (treated) - ppm Ca (control)}]}{[\text{ppm Ca (stock) - ppm Ca (control)}]} \times 100$$

Deposition on the suspended non-heat transfer surface was detected by visual inspection. The conditions of the test were: 600 ppm Ca as $CaCO_3$; 300 ppm Mg as $CaCO_3$; 400 ppm Malk as $CaCO_3$; 288 ppm $SO_4$; 425 ppm Cl; 187 ppm Na; pH 8.74 at 56°C (132.8°F); 3 ppm TTA (tolyltriazole) was used in all of the tests for copper metal corrosion control.

TABLE IV

| Treatment Example From Table I | ppm ACTIVE | % INHIBITION* | COUPON DEPOSITION RATING** |
|---|---|---|---|
| 1 | 10 | 27.0 (4) | 2 |
| | 20 | 28.6 (4) | 4 |
| 2 | 10 | 29.0 (2) | 4 |
| | 20 | 29.6 (2) | 4 |
| 3 | 10 | 26.8 (2) | 2 |
| | 20 | 28.4 (2) | 2 |
| 4 | 10 | 24.2 (2) | 2 |
| | 20 | 26.4 (2) | 2 |
| 5 | 10 | 25.8 (2) | 2 |
| | 20 | 28.1 (1) | 2 |
| 6 | 10 | 24.6 (2) | 2 |
| | 20 | 25.8 (2) | 3 |
| 7 | 10 | 34.4 (2) | 2 |
| | 20 | 33.9 (2) | 4 |
| 8 | 10 | 30.7 (2) | 3 |
| | 20 | 30.9 (2) | 3 |
| 9 | 10 | 11.7 (1) | 4 |
| | 20 | 17.2 (2) | 2 |
| 10 | 10 | 21.7 (2) | 3 |
| | 20 | 20.5 (2) | 3 |

*average percent inhibition with number of tests in parenthesis

**Clean-1 ; Very Slight Deposit-2; Slight Deposit-3; Moderate Deposit-4

Recirculator Testing for Scale and Corrosion Inhibition.

A recirculator test was conducted in the Bench Top Recirculator Units. These recirculator units are designed to provide a realistic measure of the ability of a treatment to prevent corrosion and scale formation under heat transfer conditions. The treated water is circulated through a corrosion coupon by-pass rack, into which corrosion coupons are

inserted, and the water passes a heat exchanger tube contained in a Plexiglas block. The heat exchanger is fitted with an electric heater so that the heat load on the heat exchanger tube can be varied and controlled in the 0 to 50440J/$m^2$/s (16,000 BIU/ft2/hr.) range. The water velocity past the exchanger can be controlled in the 0 to 2.04m/sec. (6.7 ft/sec.) range. The pH and temperature of the circulating water are automatically controlled. The treated water is prepared by the addition of the component ions to deionized water. Provisions for continuous makeup and blowdown are made by pumping fresh treated water from supply tanks to the sump of the unit, with overflow from the sump serving as blowdown. The total system volume is about 12 L.

The water composition for the test was: 600ppm Ca, 300 ppm Mg, 50 Malk (all three as $CaCO_3$) 12 ppm $PO_4$, 6 ppm pyrophosphate (as $PO_4$), 2.4 ppm active HEDP. The flow rate was 0.30 litres/sec. (4 gpm) and the pH 7.2 pH was controlled by $CO_2$ addition.

Example 10 from Table I at 7 ppm (active) prevented scale and improved the capability of orthophosphate to control corrosion on mild steel (LCS) and admiralty heat transfer surfaces at 49°C (120° F) water temperature and 57°C (135°F) skin temperature for six days. Insignificant deposition developed on the LCS surface. The admiralty coupons were free of deposit. The corrosion rates for LCS and admiralty were 0.018 millimetres per year and 0.020 millimetres per year (0.7 and 0.8 mpy), respectively.

## Claims

1. A method for simultaneously controlling the deposition of scale and the formation of corrosion in a cooling water system comprising adding to said system an effective amount for the purpose of a water soluble terpolymer having the structure:

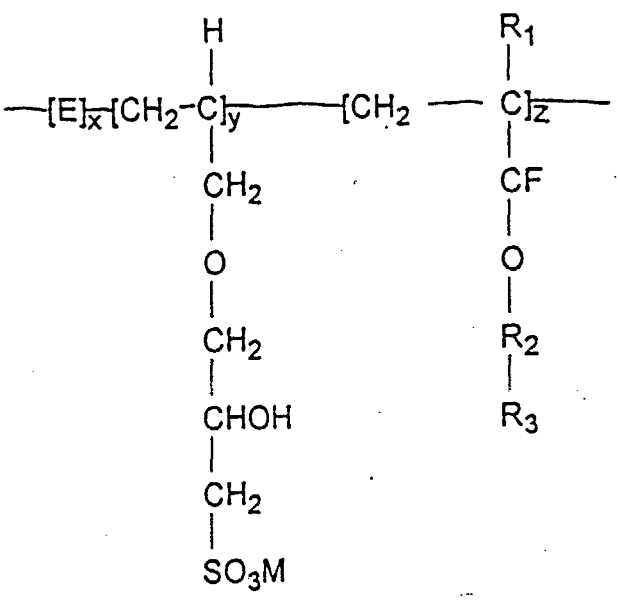

where E comprises the repeat unit obtained after polymerization of an alpha, beta ethylenically unsaturated monomer, and wherein $R_1$ is H or lower ($C_1$-$C_4$) alkyl, F is $H_2$ or O, M is a water soluble cation, $R_2$ is $(CH_2\text{-}CH_2\text{-}O)_n$,

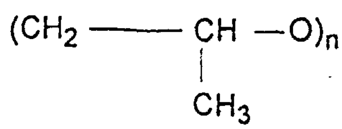

or a mixture of both, n is an integer of from 1 to about 40, $R_3$ is H lower ($C_1$-$C_4$) alkyl or an acetate.

2. A method as claimed in claim 1, wherein the molar ratio of x:y:z is approximately 1-10:1-4:1-4.

3. A method as claimed in claim 2, wherein the molar ratio is approximately 3-6:1-3:1-2.

4. A method as claimed in any one of the preceding claims, wherein monomer z is selected from the group consisting of polyethylene glycol allyl ether and polyethylene glycol monomethacrylate.

5. A method as claimed in any one of the preceding claims, wherein said monomer referred to in the definition of E is a carboxylic acid, amide form thereof, or lower alkyl ($C_1$-$C_6$) ester or hydroxylated lower alkyl ($C_1$-$C_5$) ester of said carboxylic acid.

6. A method as claimed in any one of the preceding claims, wherein E is selected from the group consisting of acrylic acid, methacrylic acid, acrylamide, maleic acid, maleic anhydride, fumaric acid, itaconic acid, 2-hydroxy propyl acrylate, styrene sulfonic acid, 2-acrylamido-2-methylpropanesulfonic acid and salts thereof.

7. A method as claimed in any one of the preceding claims, wherein the copolymer has a molecular weight (Mn) of between 1,000 and 100,000.

8. A method as claimed in claim 7, wherein the copolymer has a molecular weight (Mn) of between about 1,000 and 30,000.

9. A method as claimed in claim 8, wherein the copolymer has a molecular weight (Mn) of between about 1,500 and 10,000.

10. A method as claimed in any one of the preceding claims wherein the copolymer is added to the water in the cooling water system in an amount of 0.1-500 parts polymer based upon 1 million parts of the water.

11. A method as claimed in any one of the preceding claims, further comprising adding to the cooling water system an effective amount for the purpose of a topping agent selected from the group consisting of phosphoric acids and water soluble salts thereof and phosphonic acids and water soluble salts thereof.

12. A method as claimed in claim 11, wherein the phosphoric acid is a member selected from the group consisting of orthophosphoric acid, pyrophosphoric acid, tripolyphosphoric acid, trimetaphosphoric acid, tetrametaphosphoric acid, hexametaphosphoric acid and water soluble salts thereof.

13. A method as claimed in claim 11, wherein the phosphonic acid is a member selected from the group consisting of ethylene diaminetatramethylene phosphonic acid, methylene diphosphonic acid, hydroxyethylidene diphosphonic acid, 2-phosphonobutane-1,2,4-tricarboxylic acid, diethylenetriaminepenta(methylenephosphonic acid) and hydroxy phosphonoacetic acid.

14. A method as claimed in any one of claims 11 to 13, wherein the topping agent is added to said system in an amount of 1 to about 500 parts per million parts of the water.

15. A method as claimed in any one of the preceding claims, wherein the temperature of the cooling water system is in excess of 48.89°C (120°F).

**Patentansprüche**

1. Verfahren zur simultanen Kontrolle der Kesselsteinablagerung und der Korrosionsbildung in einem Kühlwassersystem, das das Zufügen zu genanntem System einer wirksamen Menge für den Zweck eines wasserlöslichen Terpolymers mit der folgenden Struktur umfaßt:

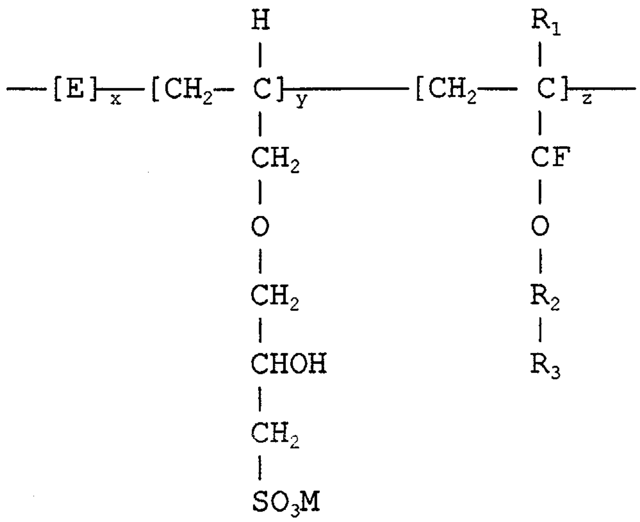

worin E die Grundeinheit umfaßt, die nach Polymerisation eines α-, β-ethylenisch ungesättigten Monomers erhalten wird und worin $R_1$ H oder ein niederes ($C_1$- bis $C_4$-)Alkyl ist, F $H_2$ oder O ist, M ein wasserlösliches Kation ist, $R_2$ $(CH_2\text{-}CH_2\text{-}O)_n$,

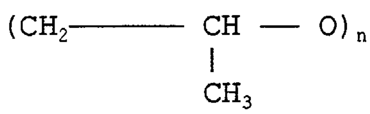

oder ein Gemisch von beidem ist, n eine ganze Zahl von 1 bis circa 40 ist, $R_3$ H, ein niederes ($C_1$- bis $C_4$-)Alkyl oder ein Acetat ist.

**2.** Verfahren nach Anspruch 1, worin das Molverhältnis von x:y:z circa 1-10:1-4:1-4 ist.

**3.** Verfahren nach Anspruch 2, worin das Molverhältnis circa 3-6:1-3:1-2 ist.

**4.** Verfahren nach einem der vorangehenden Ansprüche, worin Monomer z aus der Gruppe ausgewählt wird, die aus Polyethylenglycolallylether und Polyethylenglycolmonomethacrylat besteht.

**5.** Verfahren nach einem der vorangehenden Ansprüche, worin genanntes Monomer, auf das in der Definition von E verwiesen wird, eine Carbonsäure, eine Amidform davon oder ein niederer Alkyl-($C_1$-$C_6$)-Ester oder ein hydroxylierter niederer Alkyl-($C_1$-$C_5$)-Ester von genannter Carbonsäure ist.

**6.** Verfahren nach einem der vorangehenden Ansprüche, worin E aus der Gruppe ausgewählt wird, die aus folgendem besteht: Acrylsäure, Methacrylsäure, Acrylamid, Maleinsäure, Maleinsäureanhydrid, Fumarsäure, Itakonsäure, 2-Hydroxypropylacrylat, Styrolsulfonsäure, 2-Acrylamido-2-methylpropansulfonsäure und Salzen davon.

**7.** Verfahren nach einem der vorangehenden Ansprüche, worin das Copolymer ein Molekulargewicht (Mn) von zwischen 1.000 und 100.000 aufweist.

**8.** Verfahren nach Anspruch 7, worin das Copolymer ein Molekulargewicht (Mn) von zwischen circa 1.000 und 30.000 aufweist.

**9.** Verfahren nach Anspruch 8, worin das Copolymer ein Molekulargewicht (Mn) von zwischen circa 1.500 und 10.000 aufweist.

**10.** Verfahren nach einem der vorangehenden Ansprüche, worin das Copolymer dem Wasser in dem Kühlwassersystem in einer Menge von 0,1 - 500 Teilen Polymer basierend auf 1 Million Teilen des Wassers zugefügt wird.

11. Verfahren nach einem der vorangehenden Ansprüche, das darüber hinaus das Zufügen zu dem Kühlwassersystem einer wirksamen Menge für den Zweck eines Topping-Mittels umfaßt, das aus der Gruppe ausgewählt wird, die aus folgendem besteht: Phosphorsäuren und wasserlöslichen Salzen davon und Phosphonsäuren und wasserlöslichen Salzen davon.

12. Verfahren nach Anspruch 11, worin die Phosphorsäure ein Einzelglied ist, das aus der Gruppe ausgewählt wird, die aus folgendem besteht: Orthophosphorsäure, Pyrophosphorsäure, Tripolyphosphorsäure, Trimetaphosphorsäure, Tetrametaphosphorsäure, Hexametaphosphorsäure und wasserlöslichen Salzen davon.

13. Verfahren nach Anspruch 11, worin die Phosphonsäure ein Einzelglied ist, das aus der Gruppe ausgewählt wird, die aus folgendem besteht:

    Ethylendiamintetramethylenphosphonsäure,
    Methylendiphosphonsäure, Hydroxyethylidendiphosphonsäure, 2-Phosphonbutan-1,2,4-tricarbonsäure,
    Diethylentriaminpenta(methylenphosphonsäure) und
    Hydroxyphosphonessigsäure.

14. Verfahren nach einem der Ansprüche 11 bis 13, worin das Topping-Mittel genanntem System in einer Menge von 1 bis circa 500 Teilen auf eine Million Teile des Wassers zugefügt wird.

15. Verfahren nach einem der vorangehenden Ansprüche, worin die Temperatur des Kühlwassersystems über 48,89°C (120°F) hinausgeht.

## Revendications

1. Procédé pour réguler simultanément le dépôt de tartre et la formation de corrosion dans un système aqueux de refroidissement comprenant l'addition dans ledit système d'une quantité efficace à cet effet d'un terpolymère soluble dans l'eau ayant la structure :

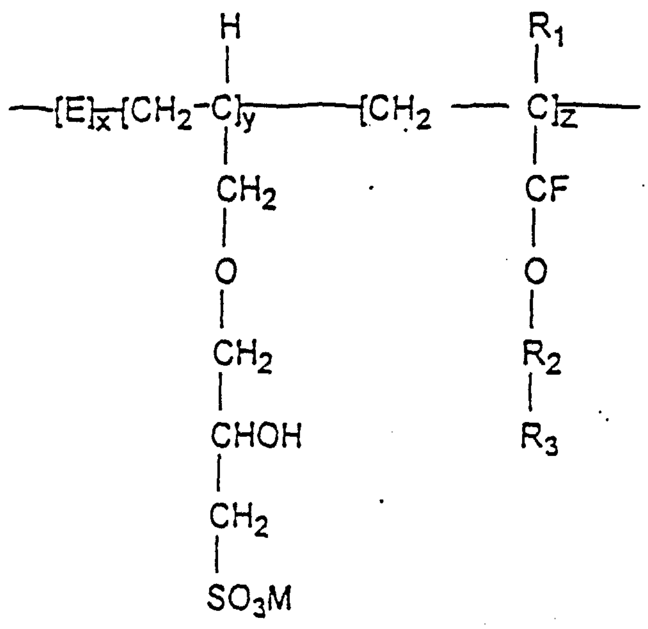

dans laquelle E représente le motif répété obtenu après polymérisation d'un monomère à insaturation éthylénique alpha, bêta, et dans laquelle $R_1$ est H ou un alkyle inférieur en ($C_1$-$C_4$), F est $H_2$ ou O, M est un cation soluble dans l'eau, $R_2$ est ($CH_2$-$CH_2$-O)$_n$,

$$\underset{\displaystyle CH_3}{(CH_2-\overset{|}{CH}-O)_n}$$

ou un mélange des deux, n est un entier de 1 à environ 40, $R_3$ est H, un alkyle inférieur en ($C_1$-$C_4$) ou un acétate.

**2.** Procédé selon la revendication 1, dans lequel le rapport en moles de x:y:z est d'environ 1-10:1-4:1-4.

**3.** Procédé selon la revendication 2, dans lequel le rapport en moles est d'environ 3-6:1-3:1-2.

**4.** Procédé selon l'une quelconque des revendications précédentes, dans lequel le monomère z est choisi dans l'ensemble formé par l'éther allylique de polyéthylèneglycol et le monométhacrylate de polyéthylèneglycol.

**5.** Procédé selon l'une quelconque des revendications précédentes, dans lequel ledit monomère mentionné dans la définition de E est un acide carboxylique, une forme amide de celui-ci, ou un ester d'un alkyle inférieur en ($C_1$-$C_6$) ou un ester d'un alkyle inférieur en ($C_1$-$C_5$) hydroxylé dudit acide carboxylique.

**6.** Procédé selon l'une quelconque des revendications précédentes, dans lequel E est choisi dans l'ensemble formé par l'acide acrylique, l'acide méthacrylique, l'acrylamide, l'acide maléique, l'anhydre maléique, l'acide fumarique, l'acide itaconique, l'acrylate de 2-hydroxy-propyle, l'acide styrène-sulfonique, l'acide 2-acrylamido-2-méthylpropanesulfonique et les sels de ceux-ci.

**7.** Procédé selon l'une quelconque des revendications précédentes, dans lequel le copolymère a une masse moléculaire (Mn) comprise entre 1.000 et 100.000.

**8.** Procédé selon la revendication 7, dans lequel le copolymère a une masse moléculaire (Mn) comprise entre environ 1.000 et 30.000.

**9.** Procédé selon la revendication 8, dans lequel le copolymère a une masse moléculaire (Mn) comprise entre environ 1.500 et 10.000.

**10.** Procédé selon l'une quelconque des revendications précédentes, dans lequel le copolymère est ajouté à l'eau dans le système aqueux de refroidissement selon une quantité de 0,1 à 500 parties de polymère sur la base de 1 million de parties d'eau.

**11.** Procédé selon l'une quelconque des revendications précédentes, comprenant en outre l'addition au système aqueux de refroidissement d'une quantité efficace à cet effet d'un agent de charge choisi dans l'ensemble formé par les acides phosphoriques et leurs sels solubles dans l'eau et les acides phosphoniques et leurs sels solubles dans l'eau.

**12.** Procédé selon la revendication 11, dans lequel l'acide phosphorique est un élément choisi dans l'ensemble formé par l'acide orthophosphorique, l'acide pyrophsophorique, l'acide tripolyphosphorique, l'acide trimétaphosphorique, l'acide tétramétaphosphorique, l'acide hexamétaphosphorique et leurs sels solubles dans l'eau.

**13.** Procédé selon la revendication 11, dans lequel l'acide phosphonique est un élément choisi dans l'ensemble formé par l'acide éthylènediaminetétraméthylène-phosphonique, l'acide méthylène-di-phosphonique, l'acide hydroxyéthylidène-diphosphonique, l'acide 2-phosphonobutane-1,2,4-tricarboxylique, l'acide diéthylènetriaminepenta-(méthylènephosphonique) et l'acide hydroxyphosphono-acétique.

**14.** Procédé selon l'une quelconque des revendications 11 à 13, dans lequel l'agent de charge est ajouté audit système selon une quantité de 1 à environ 500 parties par million de parties d'eau.

**15.** Procédé selon l'une quelconque des revendications précédentes, dans lequel la température du système aqueux de refroidissement dépasse 48,89°C (120°F).